(19) Europäisches Patentamt
European Patent Office
Office européen des brevets

(11) Veröffentlichungsnummer: **0 026 004**
**B1**

(12) # EUROPÄISCHE PATENTSCHRIFT

(45) Veröffentlichungstag der Patentschrift: **18.05.83**

(51) Int. Cl.³: **C 09 K 3/34**, G 02 F 1/137

(21) Anmeldenummer: **80200631.2**

(22) Anmeldetag: **02.07.80**

(54) **Flüssigkristallmischung.**

(30) Priorität: **21.09.79 CH 8577/79**

(43) Veröffentlichungstag der Anmeldung: **01.04.81 Patentblatt 81/13**

(45) Bekanntmachung des Hinweises auf die Patenterteilung: **18.05.83 Patentblatt 83/20**

(84) Benannte Vertragsstaaten: **CH DE GB LI NL**

(56) Entgegenhaltungen:

**EP-A-0 002 104**
**FR-A-2 243 980**
**FR-A-2 244 702**
**FR-A-2 444 701**
**GB-A-2 019 026**
**US-A-3 975 285**

**Die Akte enthält technische Angaben, die nach dem Eingang der Anmeldung eingereicht wurden und die nicht in dieser Patentschrift enthalten sind.**

(73) Patentinhaber: **BBC Aktiengesellschaft Brown, Boveri & Cie., Haselstrasse, CH-5401 Baden (CH)**

(72) Erfinder: **Osman, Maged A., Dr., Lerchenrain 1, CH-8046 Zürich (CH)**
Erfinder: **Révész, Laszlo, Dr., Lanzkronstrasse 23, CH-4056 Basel (CH)**
Erfinder: **Scheffer, Terry J., Dr., Höhenstrasse 4, CH-8127 Forch/ZH (CH)**
Erfinder: **Markert, Jürgen, Dr., Im Guntengarten 32, CH-4107 Ettingen/BL (CH)**

**EP 0 026 004 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Flüssigkristallmischung

Die Erfindung betrifft Flüssigkristall-(FK)-Mischungen, die zur Verwendung für Guest/Host elektrooptische Anzeigezellen bestimmt sind.

Bei Anzeigezellen mit flüssigkristalliner dielektrischer Phase ist es bekannt, den elektrooptischen Effekt der Anzeige durch Einlagerung von dichroitischen oder pleochroitischen Farbstoffen als sogenannte «Gast-Phase» in einer flüssigkristallinen Matrix als sogenannte «Wirt-Phase» zu erzeugen (siehe Heilmeier, G. H. et al, Molec. Cryst. and Liq. Cryst. 8, 1969, 293-304). Die Farbstoffmoleküle der Gast-Phase werden hierbei von der einbettenden Wirt-Phase, in der sie gelöst bzw. verteilt sind, entsprechend dem anliegenden elektrischen Feld orientiert und zeigen wegen ihrer pleochroitischen Eigenschaften je nach Orientierung eine unterschiedliche Lichtabsorption. Im Unterschied zu normalen Farbstoffen hängt die von pleochroitischen Farbstoffen absorbierte Lichtmenge von der Orientierung ihrer Moleküle zum elektrischen Feldverkehr des einfallenden Lichtes ab. Durch Anlegen eines elektrischen Feldes auf die in einer Zelle als dünne Schicht verteilte FK-Mischung werden die nematischen Flüssigkristalle der Wirt-Phase und zusammen mit diesen die als Gast-Phase eingelagerten pleochroitischen Farbstoffe umorientiert, was zu einer Änderung der Lichtabsorption führt.

Als Beispiele von pleochroitischen bzw. dichroitischen Farbstoffen sind Indophenolblau, Indigoderivate, Azofarbstoffe und dergleichen beschrieben.

Seit den grundlegenden Arbeiten von Heilmeier sind zahlreiche Entwicklungen und Verbesserungen von «Guest/Host»-Anzeigen bekannt geworden. Bei der ursprünglich von Heilmeier beschriebenen Anzeigezelle hat der nematische Flüssigkristall eine gleichmässige Ausrichtung parallel zu den Zellenplatten, wenn keine Spannung an den Elektroden anliegt und die Guest/Host-Mischung besteht aus einem Farbstoff mit positivem Dichroismus als Gast-Phase und einer nematischen Wirt-Phase mit positiver dielektrischer Anisotropie (im folgenden auch kurz DKA genannt). Für diesen Anzeigetyp wird ein Polarisator benötigt. Von Uchida et al [Molec. Cryst. & Liqu. Cryst., 54, (1979) 161-174] wurde eine Modifikation der Heilmeier'schen Zelle mit dem Vorteil einer schärferen Schwelle und steilerem Übergang zur Sättigung beschrieben. Der Unterschied gegenüber der Heilmeier'schen Zelle besteht darin, dass die nematische Struktur bei abgeschalteter Spannung eine Verdrillung um 90° erleidet.

Ferner wurde von den zuletzt genannten Autoren eine Guest/Host-Anzeige beschrieben, bei der die nematische Struktur ohne anliegende Spannung nahezu senkrecht zu den Zellenplatten liegt. Hierbei ist die DKA der Wirt-Phase negativ, aber der Gast-Phasen-Farbstoff hat immer noch einen positiven Dichroismus. Dieser Anzeigentyp hat den Vorteil, dass er ein positives Bild oder Muster darstellen kann, z.B. dunkle Ziffern auf einem hellen Hintergrund.

Ein weiterer Typ von Guest/Host-Anzeigen, die ebenfalls eine positive Bilddarstellung ermöglichen, wurde von Pelzl et al [Kristall und Technik, 14 (1979) 817] beschrieben. Eine solche Zelle hat im wesentlichen den Aufbau der Heilmeier'schen Zelle und verwendet eine Wirt-Phase mit positiver DKA, aber mit einem Gast-Phasen-Farbstoff, der einen negativen Dichroismus zeigt.

Alle oben beschriebenen Anzeigetypen benötigen für ein annehmbares Kontrastverhältnis eine Polarisationsschicht.

Gemäss einer neueren bekannten Entwicklung, wie sie z.B. in der DE-A 2 410 557 beschrieben ist, kann auf polarisierende Deckscheiben verzichtet werden, wenn der aus nematischen Flüssigkristallen mit positiver DK-Anisotropie (als Wirt-Phase) und darin (als GastPhase) eingelagertem pleochroitischem Farbstoff zusammengesetzten dielektrischen Phase der Anzeige eine relativ geringe Menge, z.B. 1 bis 15 Gew.-%, optisch aktives Material — auch als Dotierungsmittel bezeichnet — beigemischt wird, das der Flüssigkristallmasse eine verdrillte innere Struktur verleiht, die als «chirale» oder «cholesterische» Orientierung bezeichnet wird und beispielsweise in der Arbeit von D. L. White und G. N. Taylor mit dem Titel «New Absorptive Mode Reflective Liquid Crystal Device» (J. Appl. Physics, Band 45, 1974, Seiten 4718-4723) beschrieben ist. Beispiele für Aufbau und Betrieb einer Anzeigezelle nach diesem Prinzip sind in den DE-A 2 639 675 und 2 658 568 beschrieben.

In der DE-A 2 835 863 ist schliesslich eine Modifikation der von White und Taylor vorgeschlagenen Zelle beschrieben, die ebenfalls einen cholesterisch orientierenden Zusatz enthält und ohne Polarisator ein brauchbares Kontrastverhältnis ermöglicht; hierbei ist die DKA der Wirt-Phase aber nicht positiv, sondern negativ und mit einer solchen Anzeige ist wiederum eine positive Darstellung möglich.

In der Fachwelt werden FK-Anzeigezellen mit cholesterisch orientierter Wirt-Phase und darin als Gast-Phase eingebettetem Farbstoff als «cholesteric guest/host»-(«CGH»)- oder kurz als CGH-FK-Anzeigezellen bezeichnet; solche Anzeigezellen sind insbesondere deswegen vorteilhaft, weil sie sich für kommerzielle Fertigung und Verwendung ohne äussere Polarisatoren eignen und eine ausreichende Kontrastwirkung bei vereinfachtem Zellenaufbau ermöglichen.

Es hat sich gezeigt, dass die Auswahl geeigneter Farbstoffe für Guest/Host-Zellen kritisch und sehr schwierig ist: Zunächst müssen die dichroitischen Verhältniswerte solcher Systeme mit Wirt-Phase und darin eingebettetem Farbstoff als Gast-Phase genügend gross sein, um der Anzeigezelle eine ausreichende Helligkeit und ein ausreichendes Kontrastverhältnis zu verleihen. Dabei ist das pleochroitische bzw. dichroitische Verhältnis des Systems als das Verhältnis $a_1/a_2$ derjenigen Extinktionswerte («Absorbanz») des Farbstoffes definiert, die gemessen werden, wenn $a_1$ die molekulare Ausrichtung oder Hauptachse der nematischen Wirt-Phase mit eingebettetem Farbstoff als Gast-Phase parallel zum E-Vektor des einfallendes Lichtes liegt und $a_2$ diese molekulare Ausrichtung senkrecht zum E-Vektor des

einfallenden Lichtes liegt. Die Werte von $a_1$ und $a_2$ können in an sich bekannter Weise fotometrisch gemessen werden, wie beispielsweise in der oben genannten Arbeit von White und Taylor beschrieben. Ein Farbstoff hat dann einen positiven Dichroismus, wenn der Wert von $a_1/a_2$ grösser als 1 ist, und einen negativen Dichroismus, wenn sein Wert von $a_1/a_2$ kleiner als 1 ist.

Bei positiv dichroitischen Farbstoffen für GH-Zellen sollte der Wert von $a_1/a_2$ mindestens etwa 5 betragen, um ausreichende Kontraste und Helligkeiten der Anzeige zu gewährleisten.

Ausser dem Extinktionsverhältnis $a_1/a_2$ sind aber zur Verwendung eines Farbstoffes in Guest/Host-Anzeigen noch andere Parameter wichtig: Ein Absorptionsmaximum des Farbstoffes muss im Bereich der sichtbaren Wellenlängen, d.h. zwischen 400 und 700 nm, liegen und der Farbstoff muss in der dotierten Wirt-Phase bis etwa 100°C praktisch beständig sein

(a) gegen Wechselspannungen von bis zu 20 V,
(b) gegen Licht bzw. Tageslicht-UV und
(c) gegen die Komponenten der dotierten Wirt-Phase.

Zusammenfassungen der bisher für Guest/Host-Effektzellen vorgeschlagenen Farbstoffe finden sich in den oben genannten Publikationen von Heilmeier et al und von White und Taylor, sowie in einer Arbeit von Bloom und Hung, Molec. Cryst. and Liqu. Cryst., 40 (1977), 213 ff., ferner in der DE-A 2 627 215, in einer Publikation von Constant et al, 7th International Liquid Crystal Conference 1978 und in der Arbeit von R. J. Cox in Molec. Cryst. and Liqu. Cryst. 55 (1979), 1-32.

Die bisher für Guest/Host-Zellen vorgeschlagenen Farbstoffe erfüllen aber die oben genannten Anforderungen nicht in ausreichendem Masse. Insbesondere haben sich die in bezug auf den $a_1/a_2$-Wert und das Absorptionsmaximum an sich zweckmässigen und zur Verwendung in Guest/Host-Zellen meist vorgeschlagenen Azofarbstoffe als ungenügend beständig gegen Licht bzw. UV-Licht (zu geringe fotochemische Stabilität) und zum Teil auch als chemisch labil erwiesen. Andererseits ist die im Vergleich zu Azofarbstoffen allgemein höhere fotochemische und allgemein chemische Stabilität von Anthrachinon-Farbstoffen mit der Grundstruktur (10)

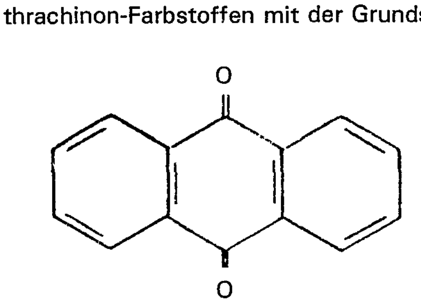

(10)

bekannt und tatsächlich wurden in der Literatur auch Vorschläge zur Verwendung von Anthrachinon-Farbstoffen für Guest/Host-Anzeigezellen gemacht. Die meisten der bisher vorgeschlagenen Anthrachinon-Farbstoffe haben aber einen zu niedrigen $a_1/a_2$-Wert, d.h. einen zu kleinen dichroitischen Verhältniswert, um eine niedrige Betriebsspannung von 3 bis 4,5 V zu ermöglichen.

Aus der US-A 3 975 285 ist es bekannt, als Additive für die Flüssigkristallphase von dynamischen Streuzellen zur Vermeidung der Nachteile ionischer Additive bestimmte nicht-ionische cyclische Verbindungen zu verwenden, die im Molekül bzw. in den Molekülen mindestens eine Keto- oder Iminogruppe zusammen mit mindestens einer Hydroxyl- oder Aminogruppe enthalten; zu diesen Verbindungen gehören neben vielen anderen Strukturen auch Anthrachinone mit ringständigen Hydroxy- oder Aminogruppen, die Farbstoffcharakter haben können, was aber für dynamische Streuzellen nicht kritisch und häufig nicht einmal erwünscht ist. Soweit die aus US-A 3 975 285 bekannten Additive zufällig dichroitische Farbstoffe mit Anthrachinonstruktur sind, haben die gelben bis roten Farbstoffe $a^1/a^2$-Werte im Bereich von etwa 5 bzw. die blauen Farbstoffe solche von unter 7.

In der oben erwähnten Publikation von J. Constant wurden verschiedene substituierte Anthrachinone der Formeln (11) und (12)

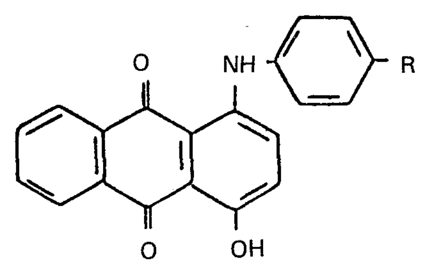

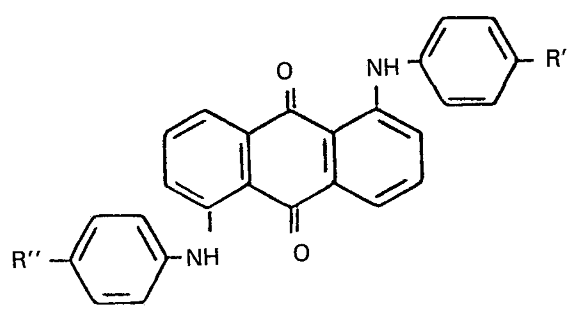

untersucht, wobei R, R' und R'' Alkyl- und Alkoxygruppen mit bis zu 9 C-Atomen im Aklylteil oder Dimethylamino bedeuten. Die dichroitischen Verhältniswerte $a_1/a_2$ dieser Farbstoffe in einer handelsüblichen nematischen Phase (Produkt «Ro-TN-403» der Firma Hoffmann-La Roche, eine Mischung aus Biphenyl- und Pyrimidin-Verbindungen) liegen im Bereich von 5,6 bis 7,0, was die Eignung von Phenylaminogruppen zur hier interessierenden Modifikation von Anthrachinon-Farbstoffen zu bestätigen scheint. Die Phenylaminogruppe verringert aber auch die Löslichkeit der Farbstoffe in nematischer Wirt-Phase, was wiederum durch die Einführung längerer Alkyl- bzw. Alkoxyketten als R, R' bzw. R'' kompensiert werden kann. Da solche Ketten flexibel sind, haben sie praktisch keinen Einfluss auf den Wert des dichroitischen Verhältnisses.

Die dichroitischen Verhältniswerte von substituierten Anthrachinonen der obigen Formeln (11) und (12) sind zu klein, um einer mit relativ niedrigen Spannungen von z.B. 3 bis 4,5 V betriebenen Guest/Host-Anzeigezelle einen für praktische Zwecke, wie Armbanduhren, ausreichenden Anzeigekontrast zu verleihen. Dies gilt auch für die z.B. in der FR-A 2 243 980 beschriebenen 1-Arylaminoanthrachinone.

Aufgabe der Erfindung ist es, eine für Guest/Host-Anzeigezellen bestimmte FK-Mischung anzugeben, welche die hierfür üblichen Komponenten und als pleochroitischen Farbstoff einen solchen vom Typ der modifizierten Anthrachinon-Farbstoffe enthält, der aber derart modifiziert ist, dass er der Anzeigezelle die für Anzeigezellen mit verdrillter nematischer Phase typische Helligkeit und hohen Anzeigekontraste auch bei Betrieb der Guest/Host-Anzeige mit verhältnismässig niedrigen Spannungen verleiht.

Es wurde gefunden, dass diese Aufgabe durch Verwendung von bestimmten substituierten Anthrachinon-Farbstoffen der weiter unten angegebenen Formel (1) gelöst werden kann, die ein Absorptionsmaximum im Bereich von 400 bis 700 nm aufweisen, gegen Tageslicht-UV, Temperaturen bis etwa 100°C sowie gegen Wechselspannungen bis etwa 20 V stabil und mit den Komponenten der FK-Mischung kompatibel in dem Sinne sind, dass sie sich in der FK-Mischung in praktisch brauchbaren Konzentrationen, z.B. mindestens zu etwa 0,5% des Gewichtes der FK-Mischung, lösen lassen und die Komponenten der Mischung bzw. die Mischung selbst nicht nachteilig beeinflussen.

Gegenstand der Erfindung ist eine für Guest/Host-Anzeigen bestimmte Flüssigkristallmischung, die eine nematische Flüssigkristallmasse als Wirt-Phase und mindestens einen in der Wirt-Phase eingelagerten Anthrachinon-Farbstoff als Gast-Phase enthält; gewünschtenfalls kann die FK-Mischung einen optisch aktiven Zusatz zur cholesterischen Orientierung der Wirt-Phase enthalten. Vorzugsweise besteht die FK-Mischung aus 0,5 bis 30 Gew.-% Farbstoff-Gast-Phase, 0 bis 15 Gew.-% cholesterischem Zusatz und im übrigen (d.h. zu 55 bis 99,5 Gew.-%) aus nematischer Flüssigkristallmasse, die je nach Wahl eine positive oder negative DKA aufweisen kann. Die Farbstoff-Gast-Phase enthält erfindungsgemäss stets mindestens einen Farbstoff der folgenden Formel (1) und kann vollständig aus Farbstoff(en) der Formel (1) bestehen, in welchem Fall die Farbstoff-Gast-Phase meist 0,5 bis 5 Gew.-% der erfindungsgemässen Mischung ausmacht. Die Farbstoff-Gast-Phase kann zusätzlich einen oder mehrere nicht-pleochroitische(n) Farbstoff(e) oder/und einen oder mehrere Farbstoff(e) mit negativem Dichroismus enthalten, welche(r) in der Mischung ausreichend löslich sind (ist).

Der erfindungsgemäss für Gast-Phase verwendete Anthrachinonfarbstoff bzw. die Anthrachinon-Farbstoffmischung besteht aus einem bzw. mehreren Anthrachinonen der Formel (1)

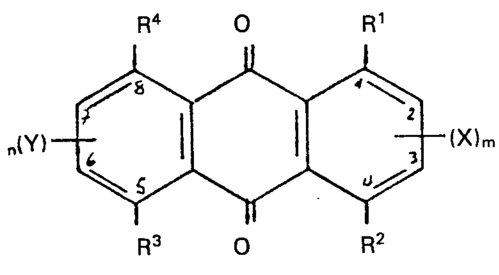 (1)

in der $R^1$, $R^2$, $R^3$ und $R^4$ Wasserstoffatome, Amino-, N-Methylamino, N,N-Dimethylamino-, Nitro-, Hydroxyl- oder Methoxygruppen sind. Alle für $R^1$ bis $R^4$ eben genannten Gruppen mit Ausnahme des Wasserstoffatoms sind auxochrome Gruppen, deren Wahl bzw. Kombination in den vier $\alpha$-Stellungen des Anthrachinonmolekküls die Lage der Lichtabsorptionsmaxima im wesentlichen bestimmt, wie dies aus der Farbstofftechnik an sich bekannt ist. Da die erfindungsgemäss für die Gast-Phase der FK-Mischung zu verwendenden Verbindungen (1) Farbstoffe sein sollen, müssen sie mindestens eine der genannten auxochromen Gruppen tragen, d.h. mindestens eine der Gruppen $R^1$ bis $R^4$ darf nicht Wasserstoff sein. Beispiele geeigneter Kombinationen von auxochromen Gruppen für $R^1$ bis $R^4$ bei den Anthrachinonen der Formel (1) sind die folgenden:

| $R^1$ | $R^2$ | $R^3$ | $R^4$ | Farbe |
|---|---|---|---|---|
| $NH_2$ | $NH_2$ | – | – | violett/blau |
| $NH_2$ | – | $NH_2$ | – | violett |
| $NH_2$ | – | – | $NH_2$ | violett |
| $NH_2$ | OH | – | – | rot |
| $NH_2$ | – | OH | – | rot |
| $NH_2$ | – | – | OH | rot |
| $NH_2$ | – | – | – | orange/gelb |
| OH | OH | – | – | orange/gelb |
| OH | – | OH | – | gelb |
| OH | – | – | OH | gelb |
| OH | – | – | – | gelb |

Deshalb werden für viele Zwecke der Erfindung Farbstoffe der Formel (1) bevorzugt, bei welchen mindestens eine der Gruppen $R^1$ bis $R^4$ die Aminogruppe oder/und mindestens eine der Gruppen $R^1$ bis $R^4$ die Hydroxylgruppe ist. Eine besonders bevorzugte Gruppe von Farbstoffen (1) sind solche, bei welchen $R^1$ die Aminogruppe und $R^2$ die Hydroxylgruppe ist.

Wie aus der Literatur [H. Inoue et al, Bull. Chem. Soc. Japan, 45 (1972) 1018-1021, und 46 (1973) 380-384)] an sich bekannt, lassen sich durch Lichtabsorptionsmessungen von Anthrachinon-Farbstoffen in verstreckten Polyvinylalkoholfolien die polarisierten Absorptionsspektren solcher Farbstoffe und damit deren Polarisationsrichtungen unter Bezug auf die C = O-Bindungsachse des Anthrachinonmoleküls feststellen. In analoger Weise kann die Absorptionsachse eines dichroitischen Farbstoffes bestimmt werden.

Es wurde nun gefunden, dass es für optimale pleochroitische Anthrachinon-Farbstoffe zur Verwendung als Gast-Phase in FK-Mischungen — insbesondere bezüglich des Absorptionsverhaltnisses $a_1/a_2$ — wesentlich darauf ankommt, dass die Absorptionsachse mit der Längsachse des Anthrachinonmoleküls, d.h. der Orientierungsachse, einen möglichst kleinen Winkel einschliesst; ferner wurde gefunden, dass sich diese Bedingung weitgehend erfüllen und überdies die anderen oben genannten Kriterien bezüglich Löslichkeit und Stabilität der Farbstoffe befriedigen lassen, wenn für die Formel (1) folgende weitere Bedingungen zutreffen: die Seitensubstituenten X und Y bedeuten Gruppen der Formeln $-SR^5$, $-SO_2R^5$, $-SO_3R^5$, $-SC(O)R^5$, $-C(O)SR^5$, $-C(O)OR^5$, $-OC(O)R^5$, $-OC(O)OR^5$, $-CH_2OR^5$, $-CH{=}N{-}R^5$, $-R^6$, $-OR^6$, $-OCH_2R^6$ oder $-CH_2CH_2R^6$, worin $R^5$ das Wasserstoffatom, eine gegebenenfalls durch Hydroxyl-, Methoxy- oder Mercaptogruppen substituierte und/oder gegebenenfalls durch 1 bis 6 Sauerstoff- oder Schwefelgruppen unterbrochene Alkylgruppe mit 1 bis 15 C-Atomen in gerader oder verzweigter Kette oder einen cyclischen Rest der Formeln

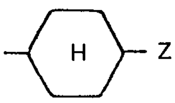
(1a)

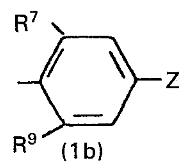
(1b)

darstellt; $R^7$ und $R^9$ in der Formel (1b) bedeutet das Wasserstoffatom, ein Halogenatom (wie F, Cl, Br oder J), die Methyl- oder die Methoxygruppe; Z ist das Wasserstoffatom, ein Halogenatom (wie oben), die Nitro-, Nitril-, Trifluormethyl- oder Aminogruppe oder eine Gruppe der Formeln $-R^8$, $-OR^8$, $-NHR^8$, $-N(CH_3)R^8$, $-C(O)OR^8$, $-OC(O)R^8$ oder $-OC(O)OR^8$, worin $R^8$ eine gegebenenfalls durch Hydroxyl-, Methoxy- oder Mercaptogruppen substituierte und/oder gegebenenfalls durch 1 bis 6 Sauerstoff- oder Schwefelatome unterbrochene Alkylgruppe mit 1 bis 15 C-Atomen in gerader oder verzweigter Kette ist.

$R^6$ in den für X und Y genannten Gruppen bedeutet eine Gruppe der genannten Formeln (1a) oder (1b). Schliesslich bedeutet m in der Formel (1) Eins oder Zwei und n ist Null, Eins oder Zwei. Bei einer bevorzugten Gruppe von Farbstoffen der Formel (1) bedeutet n Eins und m Null oder Eins.

Eine bevorzugte spezielle Gruppe von Farbstoffen (1) entspricht der Formel (2)

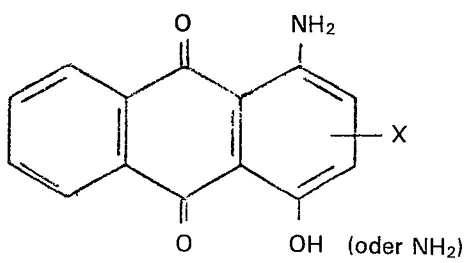
(2)

in der X die oben angegebene Bedeutung hat.

Eine weitere, ebenfalls bevorzugte spezielle Gruppe von Farbstoffen (1) entspricht der Formel (3)

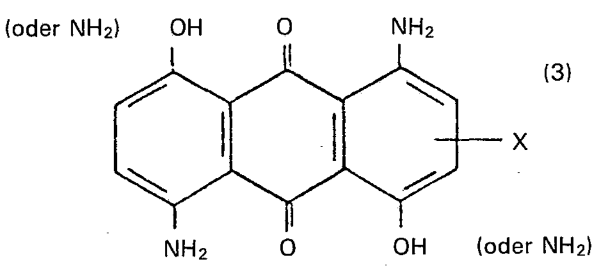
(3)

in der X die oben angegebene Bedeutung hat.

Eine weitere, ebenfalls bevorzugte spezielle Gruppe von Farbstoffen (1) entspricht der Formel (4)

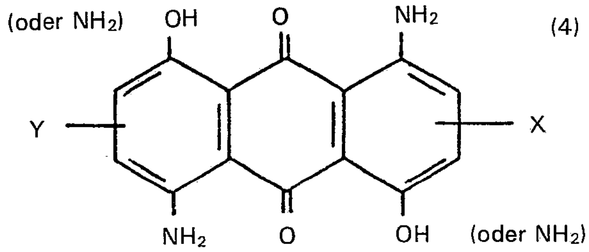
(4)

in der X und Y die oben angegebene Bedeutung haben.

Verbindungen der Formeln (2) bis (4), bei welchen X in 3-Stellung steht und Y in 7-Stellung, stellen eine weitere bevorzugte Gruppe dar.

Bei einer bevorzugten Gruppe von Farbstoffen (1) enthält X und/oder Y den Rest $R^5$, wobei $R^5$ die oben genannte Bedeutung ausser Wasserstoff hat und z.B. einen gegebenenfalls durch 1 bis 3 Sauerstoff- und/oder Schwefelatome unterbrochenen $C_1$-$C_{10}$-Alkylrest, insbesondere einen solchen mit endständiger Hydroxyl- oder Thiolgruppe, oder einen Phenylenrest der Formel (1b) bedeutet, welch letzterer als Z vorzugsweise seinerseits einen gegebenenfalls durch 1 bis 3 Sauerstoff- oder/und Schwefelatome unterbrochenen $C_1$-$C_{10}$-Alkylrest tragen kann, der wie oben erwähnt vorzugsweise eine endständige Hydroxyl- oder Thiolgruppe trägt.

Bei einer bevorzugten Gruppe von Farbstoffen bedeutet X und/oder Y die Gruppe $-S-R^5$, z.B. Methylmercapto, Ethylmercapto, Propylmercapto, n-Butylmercapto, n-Hexylmercapto, n-Octylmercapto, -Hydroxyethylmercapto, -Hydroxypropylmercapto, -Methoxymethylmercapto, -Ethoxyethylmercapto, -Propoxyethylmercapto, -(Hydroxyethoxy)-ethylmercapto, -(Hydroxyethylmercaptoethoxy)-ethylmercapto.

Eine bevorzugte Gruppe von Farbstoffen (1) trägt als Seitensubstituent X und/oder Y die Gruppe $-C(O)OR^5$, z.B. in vicinaler Stellung zu einem der Reste $R^1$ bis $R^4$, der nicht Wasserstoff ist. Spezielle Beispiele sind die folgenden Ester der 1-Amino-4-hydroxy-3-anthrachinoncarbonsäure:

Methyl-, Ethyl-, n-Propyl-, i-Propyl-, n-Butyl-, i-Butyl-, n-Pentyl-, n-Hexyl-, n-Heptyl-, n-Octyl-, n-(β-Ethyl)-hexyl-, n-Nonyl-, n-Decyl-, n-Undecyl-, n-Dodecyl-, n-Hexadecyl-, n-Octadecyl-, β-Hydroxyethyl-, γ-Hydroxy-n-propyl-, δ-Hydroxy-n-butyl-, β-Chlorethyl-, β-Bromethyl-, β-Mercaptoethyl-, β-Methoxyethyl-, β-Ethoxyethyl-, β-Propoxyethyl-, β-Butoxyethyl-, γ-Methoxy-n-propyl-, γ-Methoxy-n-butyl-, β-(ω-Hydroxyethoxyethoxy)-ethyl-, β-Phenylethyl-, β-(4'-Methyl)-phenylethyl-, β-(4'-Ethyl)-phenylethyl-, β-(4'-Butyl)-phenylethyl-, β-(2'-Methyl)-phenylethyl-, β-(2',4'-Dimethyl)-phenylethyl-, β-(2',4',6'-Trimethyl)-phenylethyl-, β-(4'-Chlor)-phenylethyl-, β-(4'-Nitro)-phenylethyl-, β-(4'-Methoxy)-phenylethyl-, β-Phenoxyethyl-, β-(4'-Methyl)-phenoxyethyl-, β-(4'-Butyl)-phenoxyethyl-, β-(2'-Methyl)-phenoxyethyl-, β-(2',4'-Dimethyl)-phenoxyethyl-, β-(4'-Chlor)-phenoxyethyl-, β-(4'-Nitro)-phenoxyethyl-, β-(4'-Methoxy)-phenoxyethyl-, Phenyl-, 4'-Pentylphenyl- und 4'-Butoxyphenylester.

Beispiele für Farbstoffe (1), die als X und/oder Y die Sulfonylgruppe $-SO_2R^5$ tragen, sind Anthrachinonyl-alkyl-aralkyl- oder -arylsulfone, wie z.B. das 1-Amino-4-hydroxyanthrachinon, das in 3-Stellung eine der folgenden Sulfonylgruppen trägt: Methylsulfonyl, Ethylsulfonyl, n-Propylsulfonyl, i-Propylsulfonyl, n-Butylsulfonyl, i-Butylsulfonyl, n-Hexylsulfonyl, n-Octylsulfonyl, n-(β-Ethyl)-hexylsulfonyl, n-Dodecylsulfonyl, n-Hexydecylsulfonyl, β-Hydroxyethylsulfonyl, β-Methoxyethylsulfonyl, β-Cyanethylsulfonyl, β-Carbomethoxyethylsulfonyl, β-Carboethoxyethylsulfonyl, Phenylsulfonyl, (4'-Methyl)-phenylsulfonyl, (4'-Chlor)-phenylsulfonyl, (2'-Chlor)-phenylsulfonyl, (3'-Brom)-phenylsulfonyl, (4'-Ethyl)-phenylsulfonyl, (4'-Isobutyl)-phenylsulfonyl, (4'-Trifluormethyl)-phenylsulfonyl, (4'-Methoxy)-phenylsulfonyl, (4'-Methoxyethoxy)-phenylsulfonyl, (4'-Hydroxyethoxy)-phenylsulfonyl, (4'-Hydroxy)-phenylsulfonyl, (4'-Nitro)-phenylsulfonyl, (2',4'-Dimethyl)-phenylsulfonyl, Benzylsulfonyl, Phenylethylsulfonyl, Phenyl-n-propylsulfonyl und Phenyl-n-butylsulfonyl.

Beispiele für Farbstoffe (1), die als X und/oder Y die Sulfonsäureestergruppe $-SO_3R^5$ tragen, sind Anthrachinonsulfonsäure-alkyl-, -aralkyl- und -arylester, etwa die α-Amino-α'-hydroxyanthrachinone, die in β-Stellung, d.h. in 3-Stellung eine Sulfonsäureestergruppe tragen, wie der 1-Amino-4-hydroxy-3-anthrachinon-sulfonsäure-methylester bzw. der entsprechende Ethyl-, n-Propyl-, i-Propyl-, n-Butyl-, i-Butyl-, n-Pentyl-, n-Hexyl-, n-Octyl-, n-(β-Ethyl)-hexyl-, n-Decyl-, n-Dodecyl-, n-Hexadecyl-, n-Octadecyl-, Hydroxyethyl-, Chlorethyl-, Cyanethyl-, Phenyl-, (4'-Methyl)-phenyl-, (4'-Ethyl)-phenyl-, (4'-Methoxy)-phenyl-, (4'-Chlor)-phenyl-, (2'-Chlor)-phenyl-, (3'-Chlor)-phenyl-, (4'-Brom)-phenyl-, (2',4'-Dimethyl)-phenyl-, (2',4',6'-Trimethyl)-phenyl-, (4'-Methylmercapto)-phenyl-, (4'-tert.-Butyl)-phenyl-, (4'-Carbomethoxy)-phenyl- und der (4'-Acetylamino)-phenylester.

Beispiele für Farbstoffe (1), die als X und/oder Y die Azomethingruppe $-CH=N-R^5$ tragen, sind die Azomethine von Anthrachinonaldehyden, wie z.B. 1-Amino-4-hydroxy-3-(methylimino-methyl)-anthrachinon bzw. die entsprechenden (Ethylimino-methyl)-, n-(Butylimino-methyl)-, (Phenylimino-methyl)-, [(4'-Methyl)-phenylimino-methyl]-, [(4'-Chlor)-phenylimino-methyl]-, [(4'-Trifluormethyl)-phenylimino-methyl]-, [(4'-Methoxy)-phenylimino-methyl]-, [(2',4'-Dimethyl)-phenylimino-methyl]-anthrachinone.

Beispiele für Farbstoffe (1), die als X und/oder Y eine Gruppe der Formel $-OCH_2R^6$ oder $-CH_2CH_2R^6$ tragen, sind die in 3-, 4-, 6- oder 7-Stellung durch Methylenoxy oder Ethylen überbrückten Anthrachinone, etwa die 1-Amino-4-hydroxy-3-X-anthrachinone, die in 3-Stellung eine der folgenden Gruppen tragen: β-Phenoxyethyl, β-(4'-Methyl)-phenoxyethyl, β-(2'-Methyl)-phenoxyethyl, β-(2',4'-Dimethyl)-phenoxyethyl, β-(4'-Nitro)-phenoxyethyl, β-(4'-Methoxy)-phenoxyethyl, β-(4'-Chlor)-phenoxyethyl, β-(4'-Trifluormethyl)-phenoxyethyl und Phenylethyl.

Derartige Gruppen X und gegebenenfalls Y ermöglichen es, den für die bestimmungsgemässe Verwendung der Farbstoffe in GH-FK-Mischungen bedeutsamen dichroitischen Verhältniswert $a_1/a_2$ auf Werte von 7 oder mehr bei blauen Farbstoffen bzw. 5 oder mehr bei roten Farbstoffen zu erhöhen. Beispielsweise zeigen Farbstoffe der Formeln (2) und (3), in denen X die Gruppe $-S-R^5$ bedeutet, in welcher $R^5$ einen 2-Hydroxyethylrest ($-CH_2CH_2OH$) oder einen Rest der Formel $-(CH_2)_2O(CH_2)_2-S(CH_2)_2OH$ darstellt, bei Messung in einer technisch erhältlichen nematischen Phase (z.B. Produkt «Ro-TN-403») dichroitische Verhältniswerte $a_1/a_2$ von 7,5 bis 8,6 und liegen damit wesentlich über den entsprechenden Werten der bekannten Anthrachinon-Farbstoffe der Formeln (11) und (12).

Ähnliches gilt für erfindungsgemäss als Gast-Komponente verwendete Farbstoffe der Formel (3), in welchen X gleich $R^6$ ist und als solches einen Phenylenrest der Formel (1b) bedeutet, und für weitere Verbindungen der Formel (1). Dabei versteht sich, dass mit zunehmender Wirkung von X bzw. Y die Moleküllänge zunimmt und damit der Ordnungsgrad bzw. der dichroitische Verhältniswert steigt und eine unerwünschte Löslichkeitsverminderung durch geeignete Wahl der Substitutionsparameter im Rahmen der Formel (1) vermieden werden kann.

Farbstoffe der Formel (1) sind zum Teil als solche im Zusammenhang mit der Textilfärbung bekannt und können jedenfalls nach an sich bekannten Verfahren, z.B. unter Ersatz der Halogengruppen bekannter Anthrachinon-Strukturen, wie sie beispielsweise in Friedländer, Band 24, 1941, Seiten 991 ff., bzw. der US-A 3 018 154 beschrieben sind, unter Ersatz der Sulfonsäuregruppen bekannter Anthrachinonverbindungen, wie sie z.B. in der US-A 2 640 059 oder der JP-AS 7007 037 beschrieben sind, durch Reste X bzw. Y oder durch direkte Einführung dieser Reste in das entsprechende Anthrachinongerüst erhalten werden, siehe z.B. DE-A 2 606 513, US-A 3819 665 und DE-B 1 190 123.

Die Farbstoffe (1) können in an sich bekannter Weise mit den oben genannten weiteren Komponenten an sich bekannter Art zu erfindungsgemässen FK-Mischungen verarbeitet werden, z.B. durch Vermischen und gegebenenfalls Erwärmen der nematischen Komponenten mit dem Farbstoff (1) und gegebenenfalls dem cholesterischen Zusatz; die erhaltenen FK-Mischungen können dann in entsprechende Anzeigezellen, z.B. mit der in der DE-A 2 639 675 beschriebenen Struktur, eingefüllt werden.

Geeignete nematische Komponenten und cholesterische Zusätze sind, wie erwähnt, bekannt bzw. als technische Produkte erhältlich. Als Beispiele für eine nematische FK-Masse mit positiver DK-Anisotropie sind ausser dem oben genannten Produkt «Ro-TN-403» die Produkte «Ro-TN-103», «Merck ZLI 1221» und «Merck ZLI 1291» zu nennen. Beispiele für nematische FK-Massen mit negativer DK-Anisotropie sind «Merck Licristal 914» und «Chisso Lixon En-18».

Weitere Beispiele für geeignete nematische FK-Massen bzw. cholesterische Zusätze finden sich in der oben genannten Publikation von White und Taylor sowie in den DE-A 2 410 557 und 2 658 568. Ein

Beispiel für einen als technisches Produkt erhältlichen cholesterischen Zusatz ist die Substanz «CB 15», eine Verbindung der Formel

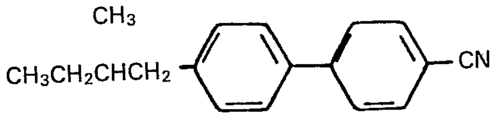

der Firma British Drug House und der Cholesterinbenzoesäureester zu nennen.

*Beispiele 1-18*

CGH-FK-Mischungen wurden mit Anthrachinon-Farbstoffen der Formeln (21), (31) und (32) hergestellt

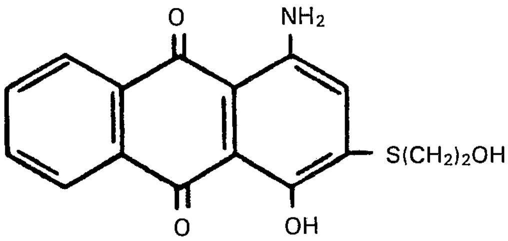

(21)

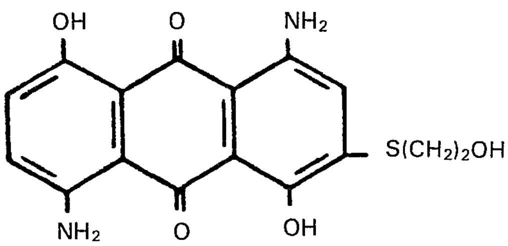

(31)

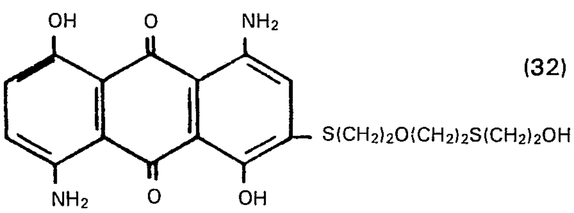

(32)

Die dichroitischen Verhältniswerte $a_1/a_2$ dieser Farbstoffe, gemessen in Ro-TN-403, waren wie folgt:

| Formel | $a_1/a_2$ |
|---|---|
| (21) | 7,5 |
| (31) | 8,6 |
| (32) | 8,5 |

Diese Farbstoffe zeigen Absorptionsmaxima im Bereich von 400 bis 700 nm und sind gegen Tageslicht-UV bei Temperaturen bis 100°C unter einer Wechselspannung von bis zu 20 V stabil sowie mit den Komponenten (a) und (b) kompatibel.

Zusammensetzung und Klärpunkte ($T_c$) der Mischungen sind in der folgenden Tabelle I wiedergegeben.

TABELLE I

| Beispiel Nr. | (a) nematische Phase (Gew.-%) | (b) CB 15 (Gew.%) | (c) Farbstoff (Formel Nr. und Gew.-%) | $T_c$ (°C) |
|---|---|---|---|---|
| 1 | Ro-TN-403 96,5 | 3 | (21) 0,5 | 79,0 |
| 2 | » 95,5 | 4 | » 0,5 | 78,0 |
| 3 | » 94,5 | 5 | » 0,5 | 77,0 |
| 4 | » 96,0 | 3 | » 1,0 | 79,3 |
| 5 | » 95,0 | 4 | » 1,0 | 78,3 |
| 6 | » 94,0 | 5 | » 1,0 | 77,3 |
| 7 | » 96,5 | 3 | (31) 0,5 | 78,8 |
| 8 | » 95,5 | 4 | » 0,5 | 77,8 |
| 9 | » 94,5 | 5 | » 0,5 | 76,7 |
| 10 | » 96,0 | 3 | » 1,0 | 78,5 |
| 11 | » 95,0 | 4 | » 1,0 | 77,5 |
| 12 | » 94,0 | 5 | » 1,0 | 76,5 |
| 13 | » 96,5 | 3 | (32) 0,5 | 78,7 |
| 14 | » 95,5 | 4 | » 0,5 | 77,6 |
| 15 | » 94,5 | 5 | » 0,5 | 76,6 |
| 16 | » 96 | 3 | » 1,0 | 78,4 |
| 17 | » 95 | 4 | » 1,0, | 77,3 |
| 18 | » 94 | 5 | » 1,0 | 76,3 |

*Beispiele 19-42*

GH-FK-Mischungen mit Anthrachinon-Farbstoffen der Formeln (41), (42), (43), (44) und (45) hergestellt:

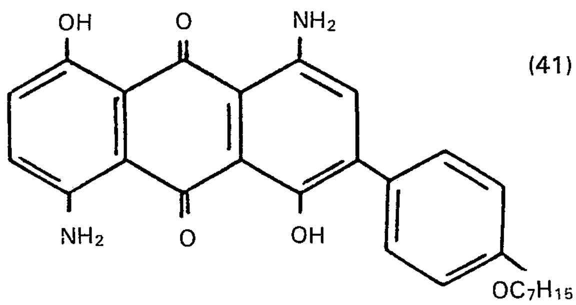

(41)

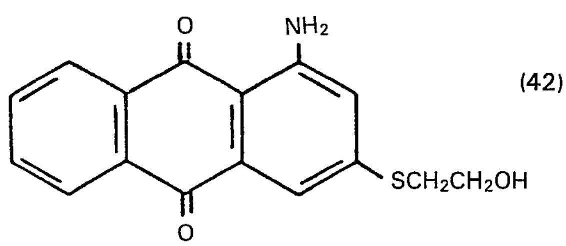

(42)

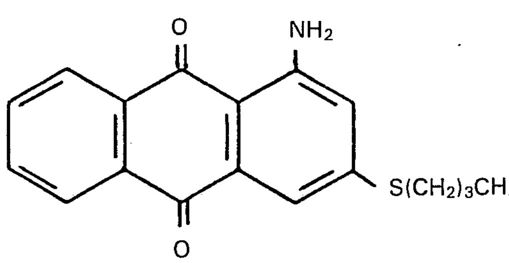

(43)

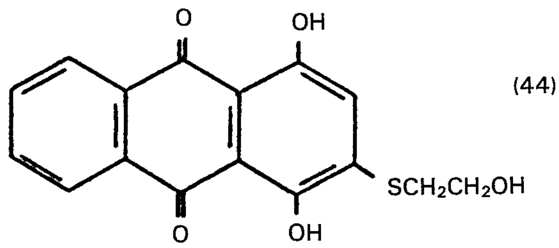

(44)

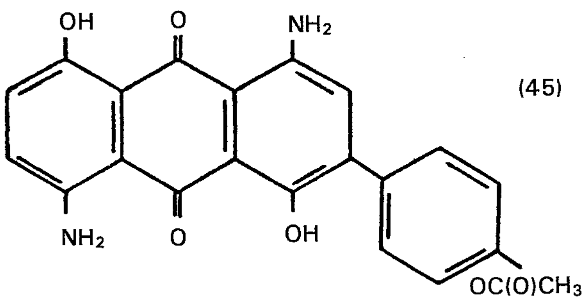

(45)

Die dichroitischen Verhältniswerte $a_1/a_2$ dieser Farbstoffe, gemessen in «Ro-TN-403», und die Absorptionsmaxima der Farbstoffe waren wie folgt:

| Formel | $a_1/a_2$ | λ (nm) |
|---|---|---|
| (41) | 8,5 | 595, 639 |
| (42) | 6,1 | 480 |
| (43) | 6,1 | 475 |
| (44) | 6,0 | 505 |
| (45) | 8,0 | 595, 640 |

Mit diesen Farbstoffen wurden entsprechend den Angaben von Tabelle I FK-Mischungen, jedoch unter Verwendung von Farbstoffen (41) anstelle von (31), (45) anstelle von (32), (42) anstelle von (21), (43) anstelle von (21) und (44) anstelle von (21) hergestellt. Die in Tabelle I angegebenen $T_c$-Werte wurden hierdurch praktisch nicht verändert.

*Beispiele 43-54*

GH-FK-Mischungen wurden mit Anthrachinon-Farbstoffen der Formeln (46) und (47) hergestellt

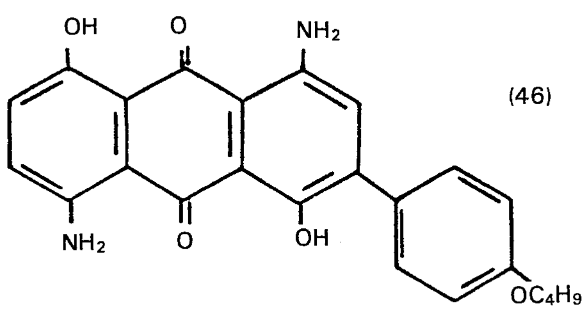

(46)

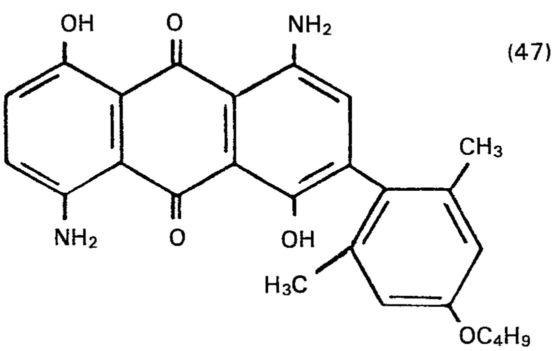

(47)

Die dichroitischen Verhältniswerte $a_1/a_2$ dieser Farbstoffe, gemessen in «Ro-TN-403», und die Absorptionsmaxima waren wie folgt:

| Formel | $a_1/a_2$ | λ (nm) |
|---|---|---|
| (46) | 8,0 | 595, 640 |
| (47) | 8,0 | 595, 640 |

Mit diesen Farbstoffen wurden entsprechend den Angaben von Tabelle I FK-Mischungen, jedoch unter Verwendung von Farbstoffen (46) bzw. (47) anstelle von Farbstoff der Formel (31) hergestellt. Die in Tabelle I angegebenen $T_c$-Werte wurden hierdurch praktisch nicht verändert.

Eine erfindungsgemässe FK-Mischung kann wie oben erwähnt auch zwei oder mehr pleochroitische Farbstoffe der Formel (1) oder/und eine Mischung von Farbstoff(en) der Formel (1) mit mindestens einem nicht-pleochroitischen Farbstoff enthalten, welcher die oben genannten Löslichkeits- und Stabilitätsbedingungen erfüllt. Derartige nicht-pleochroitische Farbstoffe sind bekannt; ihre Verwendung als zusätzliche Komponente erfindungsgemässer FK-Mischungen ermöglicht mehrfarbige Anzeigedarstellungen. Wenn man in einer CGH-Zelle beispielsweise eine erfindungsgemässe FK-Mischung mit einer Wirt-Phase mit positiver DK-Anisotropie verwendet, erscheint der angesteuerte Bereich der Anzeige im wesentlichen farblos, während der nicht angesteuerte Bereich die charakteristische Farbe des Farbstoffes (1) hat; enthält diese FK-Mischung aber zusätzlich einen nicht-pleochroitischen Farbstoff, so zeigt in diesem Fall der angesteuerte Bereich die Farbe des nicht-pleochroitischen Farbstoffes, während der nicht angesteuerte Bereich die Mischfarbe des pleochroitischen und des nicht-pleochroitischen Farbstoffes hat.

Bei entsprechender Verwendung einer erfindungsgemässen FK-Mischung mit einer Wirt-Phase mit negativer DK-Anisotropie hat der angesteuerte Bereich die charakteristische Farbe des Farbstoffes (1), während der nicht angesteuerte Bereich im wesentlichen farblos erscheint; wird hier ein zusätzlicher nichtpleochroitischer Farbstoff verwendet, so zeigt der angesteuerte Bereich die Mischfarbe des pleochroitischen und des nicht-pleochroitischen Farbstoffes, während der nicht angesteuerte Bereich die Farbe des nicht-pleochroitischen Farbstoffes aufweist.

Ferner kann die Farbstoff-Gast-Phase erfindungsgemässer FK-Mischungen zusätzlich zu Farbstoff(en) der Formel (1) — und gegebenenfalls zusätzlich zu nicht-pleochroitischem Farbstoff bzw. Farbstoffgemisch — einen oder mehrere Farbstoff(e) mit negativem Dichroismus ($a_1/a_2 < 1$) enthalten, z.B. die von D. Demus et al [Molec. Cryst. and Liqu. Cryst. 56 (1979) 115-121] beschriebenen Tetrazine der Formel

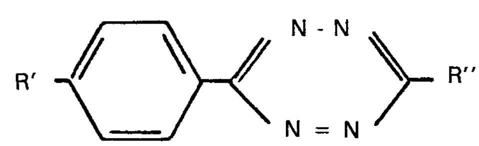

in der R' und R'' Alkoxy- bzw. Alkylgruppen sind.

**Patentansprüche**

1. Flüssigkristallmischung für elektrooptische Anzeigen, die nach dem Guest-Host-Prinzip arbeiten, welche Flüssigkristallmischung eine nematische Flüssigkristallmasse als Wirt-Phase und mindestens einen in der Wirt-Phase eingelagerten pleochroitischen Anthrachinon-Farbstoff als Gast-Phase enthält, dadurch gekennzeichnet, dass der Anthrachinon-Farbstoff ein solcher der Formel (1) ist

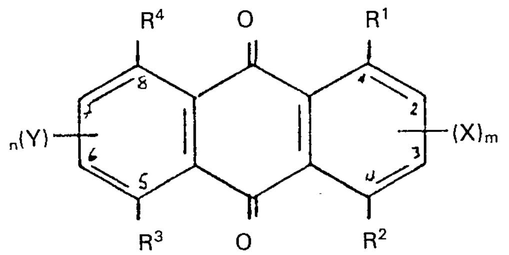 (1)

in der $R^1$, $R^2$, $R^3$ und $R^4$ Wasserstoffatome, Amino-, N-Methylamino-, N,N-Dimethylamino-, Nitro-, Hydroxyl- oder Methoxygruppen mit der Massgabe bedeuten, dass mindestens eine der Gruppen $R^1$ bis $R^4$ nicht das Wasserstoffatom ist, X und Y Reste der Formeln $-SR^5$, $-SO_2R^5$, $-SO_3R^5$, $-SC(O)R^5$, $-C(O)SR^5$, $-C(O)OR^5$, $-OC(O)R^5$, $-CH_2OR^5$, $-CH=N-R^5$, $-R^6$, $-OR^6$, $-OCH_2R^6$ oder $-CH_2CH_2R^6$ sind, worin $R^5$ das Wasserstoffatom, eine gegebenenfalls durch Hydroxyl-, Methoxy- oder Mercaptogruppen substituierte und/oder gegebenenfalls durch 1 bis 6 Sauerstoff- oder Schwefelgruppen unterbrochene Alkylgruppe mit 1 bis 15 C-Atomen in gerader oder verzweigter Kette oder einen cyclischen Rest der Formeln (1a) oder (1b)

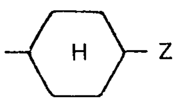 oder 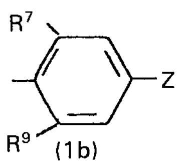

(1a) (1b)

darstellt, worin $R^7$ und $R^9$ Wasserstoffatome, Halogenatome, Methyl- oder Methoxygruppen sind und Z das Wasserstoffatom, ein Halogenatom, die Nitro-, Nitril-, Trifluormethyl- oder Aminogruppe oder eine Gruppe der Formeln $-R^8$, $-OR^8$, $-NHR^8$, $-N(CH_3)R^8$, $-C(O)OR^8$, $-OC(O)R^8$ oder $-OC(O)OR^8$ ist, in welchen $R^8$ eine gegebenenfalls durch Hydroxyl-, Methoxy- oder Mercaptogruppen substituierte und/oder gegebenenfalls durch 1 bis 6 Sauerstoff- oder Schwefelatome unterbrochene Alkylgruppe mit 1 bis 15 C-Atomen in gerader oder verzweigter Kette ist, $R^6$ eine Gruppe der obigen Formeln (1a) oder (1b) darstellt, m 1 oder 2 und n Null, 1 oder 2 bedeutet.

2. Mischung nach Patentanspruch 1, dadurch gekennzeichnet, dass mindestens eine der Gruppen $R^1$ bis $R^4$ die Aminogruppe oder die Hydroxylgruppe bedeutet.

3. Mischung nach einem der Patentansprüche 1 oder 2, dadurch gekennzeichnet, dass zwei der Gruppen $R^1$ bis $R^4$ Hydroxylgruppen oder/und Aminogruppen sind.

4. Mischung nach einem der Patentansprüche 1 bis 3, dadurch gekennzeichnet, dass m 1 und n Null ist.

5. Mischung nach einem der Patentansprüche 1 bis 4, dadurch gekennzeichnet, dass X den Rest $R^5$ mit der Massgabe enthält, dass $R^5$ nicht Wasserstoff ist.

6. Mischung nach Patentanspruch 5, dadurch gekennzeichnet, dass X den Rest $-S-R^5$ bedeutet.

7. Mischung nach Patentanspruch 5 oder 6, dadurch gekennzeichnet, dass $R^5$ einen gegebenenfalls durch 1 bis 3 Sauerstoff- oder/und Schwefelatome unterbrochenen -Hydroxyalkylrest oder ω-Mercaptoalkylrest, oder eine Phenylengruppe bedeutet, deren zum Schwefelatom paraständiges C-Atom direkt oder über ein Sauerstoff- oder Schwefelatom mit einem -Hydroxy- oder ω-Mercaptoalkylrest verbunden ist, dessen Alkylteil 1 bis 10 C-Atome enthält und gegebenenfalls durch 1 bis 3 Sauerstoff- oder Schwefelatome unterbrochen ist.

8. Mischung nach Patentanspruch 5 oder 6, dadurch gekennzeichnet, dass $R^5$ einen Hydroxyethylrest der Formel $-CH_2-CH_2-OH$ oder einen Rest der Formel $-(CH_2)_2O(CH_2)_2S-(CH_2)_2OH$ darstellt.

9. Mischung nach einem der Patentansprüche 1 bis 4, dadurch gekennzeichnet, dass X gleich $R^6$ ist und dass $R^6$ die Gruppe der Formel (1b) darstellt.

10. Mischung nach einem der Patentansprüche 1 bis 9, dadurch gekennzeichnet, dass sie ausserdem einen optisch aktiven Zusatz zur cholesterischen Ordnung der Mischung enthält, vorzugsweise in einem Anteil von 0,5 bis 15% des Gewichtes der Mischung.

11. Mischung nach einem der Patentansprüche 1 bis 10, dadurch gekennzeichnet, dass die Wirt-Phase 80 bis 98,5 Gew.-% und der mindestens eine Anthrachinon-Farbstoff der Formel (1) 0,1 bis 5 Gew.-% der Mischung ausmacht, wobei die Löslichkeit des Anthrachinon-Farbstoffes oder der Anthrachinon-Farbstoffe (1) in der Wirt-Phase bei Normaltemperatur mindestens 0,5 Gew.-% beträgt.

12. Mischung nach einem der Patentansprüche 1 bis 10, dadurch gekennzeichnet, dass sie zusätzlich mindestens einen nicht-pleochroitischen Farbstoff, z.B. in einem Anteil von 0,1 bis 5 Gew.-% der Mischung, enthält.

13. Mischung nach einem der Patentansprüche 1 bis 10, dadurch gekennzeichnet, dass die Gast-Phase 0,5 bis 30 Gew.-% der Mischung darstellt und zusätzlich zu mindestens einem Farbstoff der Formel (1) mindestens einen nicht-pleochroitischen Farbstoff oder/und mindestens einen Farbstoff mit negativem Dichroismus enthält.

**Claims**

1. Liquid crystal mixture for electro-optical displays working in accordance with the guest/host principle, which liquid crystal mixture contains a nematic liquid crystal mass as the host phase and at least one pleochroic anthraquinone dye as the guest phase incorporated in the host phase, characterised in that the anthraquinone dye is of the formula (1)

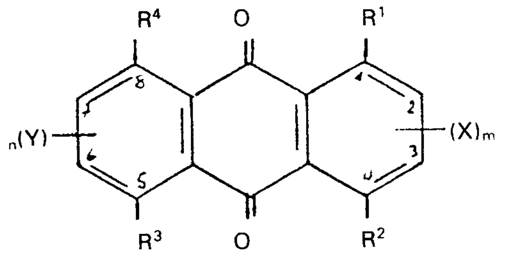

(1)

in which $R^1$, $R^2$, $R^3$ and $R^4$ are hydrogen, atoms, amino groups, N-methylamino groups, N,N-dimethylamino groups, nitro groups, hydroxyl groups or methoxy groups, with the proviso that at least one of the groups $R^1$ to $R^4$ is not a hydrogen atom, X and Y are radicals of the formulae $-SR^5$, $-SO_2R^5$, $-SO_3R^5$, $-SC(O)R^5$, $-C(O)SR^5$, $-C(O)OR^5$, $-OC(O)R^5$, $-CH_2OR^5$, $-CH=N-R^5$, $-R^6$, $-OR^6$, $-OCH_2R^6$ or $-CH_2CH_2R^6$, wherein $R^5$ is a hydrogen atom, an alkyl group which has 1 to 15 C atoms in a straight or branched chain and is unsubstituted or substituted by hydroxyl, methoxy or mercapto groups and/or can be interrupted by 1 to 6 oxygen or sulphur groups, or is a cyclic radical of the formulae (1a) or (1b)

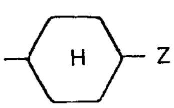 or 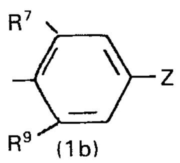

(1a) (1b)

wherein $R^7$ and $R^9$ are hydrogen atoms, halogen atoms, methyl groups or methoxy groups and Z is a hydrogen atom, a halogen atom, a nitro group, a nitrile group, a trifluoromethyl group or an amino group or a group of the formulae $-R^8$, $-OR^8$, $-NHR^8$, $-N(CH_3)R^8$, $-C(O)OR^8$, $-OC(O)R^8$ or $-OC(O)OR^8$, in which $R^8$ is an alkyl group which has 1 to 15 C atoms in a straight or branched chain and is unsubstituted by hydroxyl, methoxy or mercapto groups and/or can be interrupted by 1 to 6 oxygen or sulphur atoms, $R^6$ is a group of the above formulae (1a) or (1b), m is 1 or 2 and n is 0, 1 or 2.

2. Mixture according to Patent Claim 1, characterised in that at least one of the groups $R^1$ to $R^4$ is an amino group or hydroxyl group.

3. Mixture according to one of Patent Claims 1 or 2, characterised in that two of the groups $R^1$ to $R^4$ are hydroxyl groups or/and amino groups.

4. Mixture according to one of Patent Claims 1 to 3, characterised in that m is 1 and n is zero.

5. Mixture according to one of Patent Claims 1 to 4, characterised in that X contains the radical $R^5$, with the proviso that $R^5$ is not hydrogen.

6. Mixture according to Patent Claim 5, characterised in that X is a radical $-S-R^5$.

7. Mixture according to Patent Claim 5 or 6, characterised in that $R^5$ is an -hydroxyalkyl or ω-mercaptoalkyl radical which can be interrupted by 1 to 3 oxygen or/and sulphur atoms, or is a phenylene group, in which the C atom in the para-position relative to the sulphur atom is bonded directly or via an oxygen or sulphur atom to an -hydroxyalkyl or ω-mercaptoalkyl radical, the alkyl moiety of which contains 1 to 10 C atoms and can be interrupted by 1 to 3 oxygen or sulphur atoms.

8. Mixture according to Patent Claim 5 or 6, characterised in that $R^5$ is a hydroxyethyl radical of the formula $-CH_2-CH_2-OH$ or a radical of the formula $-(CH_2)_2O(CH_2)_2S-(CH_2)_2OH$.

.9 Mixture according to one of Patent Claims 1 to 4, characterised in that X is identical to $R^6$ and that $R^6$ is a group of the formula (1b).

10. Mixture according to one of Patent Claims 1 to 9, characterised in that it additionally contains an optically active additive to promote the cholesteric order of the mixture, preferably in the proportion of 0.5 to 15% of the weight of the mixture.

11. Mixture according to one of Patent Claims 1 to 10, characterised in that the host phase amounts to 80 to 98.5% by weight and the anthraquinone dye, of which there is at least one, of the formula (1) amounts to 0.1 to 5% by weight of the mixture, the solubility of the anthraquinone dye or anthraquinone dyes (1) in the host phase being at least 0.5% by weight at normal temperature.

12. Mixture according to one of Patent Claims 1 to 10, characterised in that it additionally contains at least one non-pleochroic dye, for example in a proportion of 0.1 to 5% by weight of the mixture.

13. Mixture according to one of Patent Claims 1 to 10, characterised in that the guest phase represents 0.5 to 30% by weight of the mixture and, additionally to at least one dye of the formula (1), contains at least one non-pleochroic dye or/and at least one dye having negative dichroism.

**Revendications**

1. Mélange de cristaux liquides pour visuels électro-optiques qui fonctionnent suivant le principe «guest-host», lequel mélange de cristaux liquides contient une masse de cristaux liquides nématiques, comme phase principale, et au moins un colorant anthraquinonique pléochroïque inséré dans la phase pricipale, comme phase secondaire, caractérisé en ce que le colorant anthraquinonique est un colorant de formule:

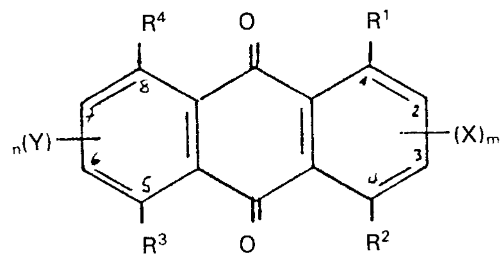

(1)

où $R^1$, $R^2$, $R^3$ et $R^4$ représent des atomes d'hydrogène ou des radiaux amino, N-méthylamino, N,N-diméthylamino, nitro, hydroxyle ou méthoxy, avec la restriction qu'au moins l'un d'entre les radicaux $R^1$ à $R^4$ n'est pas l'atome d'hydrogène, X et Y sont des radicaux des formules $-SR^5$, $-SR_2R^5$, $-SO_3R^5$, $-SC(O)R^5$, $-C(O)SR^5$, $-C(O)OR^5$, $-OC(O)R^5$, $-CH_2OR^5$, $-CH=N-R^5$, $-R^6$, $-OR^6$, $-OCH_2R^6$ ou $-CH_2CH_2R^6$, où $R^5$ représente l'atome d'hydrogène, un radical alcoyle de 1 à 15 atomes de carbone en chaîne droite ramifiée, éventuellement substitué par des radicaux

hydroxyle, méthoxy ou mercapto et/ou éventuellement interrompu par 1 à 6 atomes d'oxygène ou de soufre ou un radical cyclique de formule (1a) ou (1b):

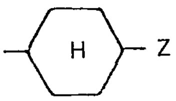
(1a)
ou
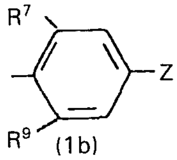
(1b)

où $R^7$ et $R^9$ sont des atomes d'hydrogène ou d'halogène ou radicaux méthyle ou méthoxy et Z est un atome d'hydrogène ou d'halogène, le radical nitro, nitrile, trifluorométhyle ou amino ou un radical de formule $-R^8$, $-OR^8$, $-NHR^8$, $-N(CH_3)R^8$, $-C(O)OR^8$, $-OC(O)R^8$ ou $-OC(O)OR^8$, où $R^8$ est un radical alcoyle de 1 à 15 atomes de carbone en chaîne droite ou ramifiée, éventuellement substitué par les radicaux hydroxyle, méthoxy ou mercapto et/ou éventuellement interrompu par 1 à 6 atomes d'oxygène ou de soufre, $R^6$ représente un radical des formules (1a) ou (1b) ci-dessus, m représente 1 ou 2 et n représente 0, 1 ou 2.

2. Mélange suivant la revendication 1, caractérisé en ce qu'au moins un des radicaux $R^1$ à $R^4$ représente le radical amino ou le radical hydroxyle.

3. Mélange suivant la revendication 1 ou 2, caractérisé en ce que deux des radicaux $R^1$ à $R^4$ sont des radicaux hydroxyle et/ou amino.

4. Mélange suivant l'une quelconque des revendications 1 à 3, caractérisé en ce que m représente 1 et n représente 0.

5. Mélange suivant l'une quelconque des revendications 1 à 4, caractérisé en ce que X comprend le radical $R^5$, avec la restriction que $R^5$ n'est pas l'atome d'hydrogène.

6. Mélange suivant la revendication 5, caractérisé en ce que X représente le radical $-S-R^5$.

7. Mélange suivant la revendication 5 ou 6, caractérisé en ce que $R^5$ représente un radical $\omega$-hydroxyalcoyle ou -mercaptoalcoyle, éventuellement interrompu par 1 à 3 atomes d'oxygène et/ou de soufre, ou un radical phényle dont l'atome de carbone en position para par rapport à l'atome de soufre est uni directement ou par un atome d'oxygène ou de soufre avec un radical $\omega$-hydroxy- ou $\omega$-mercaptoalcoyle dont la partie alcoyle compte 1 à 10 atomes de carbone et est éventuellement interrompue par 1 à 3 atomes d'oxygène ou de soufre.

8. Mélange suivant la revendication 5 ou 6, caractérisé en ce que $R^5$ représente un radical hydroxyethyle de formule $-CH_2-CH_2-OH$ ou un radical de formule $-(CH_2)_2O(CH_2)_2S(CH_2)_2OH$.

9. Mélange suivant l'une quelconque des revendications 1 à 4, caractérisé en ce que X est identique à $R^6$ et $R^6$ représente le radical de formule (1b).

10. Mélange suivant l'une quelconque des revendications 1 à 9, caractérisé en ce qu'il contient, en outre, un additif optiquement actif pour l'agencement cholestérique du mélange, de préférence en une proportion de 0,5 à 15% du poids du mélange.

11. Mélange suivant l'une quelconque des revendications 1 à 10, caractérisé en ce que la phase principale forme 80 à 98,5% en poids et le colorant anthraquinonique de formule (1) au nombre d'au moins un forme 0,1 à 5% en poids du mélange, la solubilité du colorant anthraquinonique ou des colorants anthraquinoniques (1) dans la phase principale étant d'au moins 0,5% en poids à la température ordinaire.

12. Mélange suivant l'une quelconque des revendications 1 à 10, caractérisé en ce qu'il contient, en outre, au moins un colorant non pléochroïque, par exemple en une proportion de 0,1 à 5% du poids du mélange.

13. Mélange suivant l'une quelconque des revendications 1 à 10, caractérisé en ce que la phase secondaire forme 0,5 à 30% en poids du mélange et contient en plus d'au moins un colorant de formule (1), au moins un colorant non pléochroïque et/ou au moins un colorant à dichroïsme négatif.